# FASCICULE DE BREVET EUROPEEN

(11) **EP 1 339 645 B1**
(45) Date de publication et mention de la délivrance du brevet: **07.07.2004**
(21) Numéro de dépôt: 01997462.5
(22) Date de dépôt: 23.11.2001
(51) Int. Cl.: C02F 1/52, B01D 21/00

(54) **INSTALLATION DE TRAITEMENT D'EAU PAR FLOCS LESTES**
VORRICHTUNG ZUR BEHANDLUNG VON WASSER MIT BALLASTIERTEN FLOCKEN
BALLASTED FLOC WATER TREATMENT INSTALLATION

(30) Priorité: 24.11.2000 FR 0015249
(43) Date de publication de la demande: 03.09.2003
(73) Titulaire: OTV SA, 94417 Saint-Maurice Cedex (FR)
(72) Inventeur: BINOT, Patrick, F-77600 Rentilly par Bussy Saint-Georges (FR)
(74) Mandataire: Vidon, Patrice
(86) Numéro de dépôt international: PCT/FR2001/003710
(87) Numéro de publication internationale: WO 2002/042223

(56) Documents cités:
- FR-A- 2 611 197
- FR-A- 2 767 521
- FR-A- 2 787 781
- US-A- 4 978 454
- US-A- 5 840 195
- US-A- 6 010 631
- PATENT ABSTRACTS OF JAPAN vol. 004, no. 046 (C-006), 10 avril 1980 (1980-04-10) & JP 55 020625 A (OIWA TATSUKAZU), 14 février 1980 (1980-02-14) & DATABASE WPI Week 198013 Derwent Publications Ltd., London, GB; AN 1980-22531c & JP 55 020625 A (OIWA T), 14 février 1989 (1989-02-14)

## Description

L'invention concerne le domaine du traitement de l'eau et trouve notamment son application dans le cadre des procédés de traitement des eaux usées et des procédés de traitement des eaux en vue de leur potabilisation.

Plus particulièrement, la présente invention, concerne une installation du type de celles destinées à traiter des eaux par floculation-décantation. Ce type d'installation est bien connue de l'art antérieur et très couramment utilisé dans le cadre du traitement des eaux. Les procédés mis en oeuvre dans de telles installations consistent à ajouter aux eaux un matériau permettant de coaguler au moins une grande partie des matières polluantes présentes dans les eaux de façon à former des flocs, puis à séparer les flocs ainsi formés de l'eau purifiée.

Selon un type d'installation perfectionnée, des moyens d'apport d'au moins un matériau granulaire plus dense que l'eau, tel que du sable sont prévus de façon à lester les flocs en question et ainsi favoriser et accélérer la décantation de ceux-ci. Un tel dispositif est notamment décrit dans le brevet français FR - 2627704 publié le 13 décembre 1991 au nom de la demanderesse.

C'est plus précisément à ce type d'installation perfectionnée mettant en oeuvre un matériau granulaire de lestage que se rapporte la présente invention. Ce type d'installation dite "installation de traitement d'eau par flocs lestés" comprend d'une façon classique une chambre d'injection pourvue de moyens d'amenée d'eau, de moyens d'amenée d'au moins un réactif floculant, de moyens d'amenée d'au moins un matériau granulaire plus dense que l'eau et de moyens d'agitation ; une chambre de maturation munie de moyens d'agitation; et au moins une chambre de décantation pourvue d'une zone de récupération et d'évacuation de boues et de moyens d'évacuation d' eau clarifiée.

Afin de favoriser la décantation dans la chambre prévue à cet effet, il est classique de prévoir des lamelles augmentant la surface de décantation de la chambre en question et permettant donc d'augmenter de façon très sensible la vitesse de décantation du mélange réalisé dans la chambre d'injection et dans la chambre de maturation et constitué par la matière polluante coagulée et l'eau. Les lamelles en question permettent de favoriser grandement la séparation entre ces deux composantes du mélange et l'obtention d'une eau clarifiée en sortie de la chambre de décantation.

On a constaté, de façon surprenante, que la présence de matériau granulaire accélère la décantation au point que la très grande majorité des matières à éliminer se dépose en tête de la chambre de décantation et que l'ensemble de cette chambre, qu'elle soit ou non munie de lamelles, occupe un volume important par rapport à la quantité de matières restant à éliminer.

Par ailleurs, les eaux sortant de ces installations de traitement par floculation décantation à flocs lestés contiennent encore quelques particules qui n'ont pas été piégées dans les flocs lestés et qui sont usuellement enlevés lors d'une étape de filtration ultérieure, soit sur filtre granulaire (filtres à sables, anthracite, charbon actif par exemple) soit sur tamis (piégeant les particules les plus grossières) ou membranes (qui arrêtent également les microorganismes de petites tailles comme les bactéries).

L'objectif principal de la présente invention est de réduire sensiblement les volumes occupés par l'ensemble floculation / décantation / filtration en utilisant au mieux le volume de décantation que l'utilisation de matériaux granulaires laisse, de façon surprenante, disponible pour d'autres utilisations, telles que la mise en place de moyens de tamisage ou de filtration dans cette zone, tout en obtenant dés résultats sur la qualité de l'eau clarifiée au moins aussi bons.

Cet objectif est atteint grâce à l'invention qui concerne une installation de traitement d'eau précoagulée comprenant, en série :
- au moins une zone de floculation pourvue de moyens d'amenée d'eau coagulée, de moyens d'amenée d'au moins un réactif floculant, de moyens d'amenée d'au moins un matériau granulaire plus dense que l'eau et de moyens d'agitation ; et,
- au moins une chambre de décantation pourvue d'une zone de récupération et d'évacuation de boues, de moyens d'évacuation d' eau clarifiée et de moyens de trop-plein pour évacuer les flottants;
caractérisée en ce que ladite chambre de décantation est dépourvue de lamelle et pourvue d'au moins un tamis destiné à être directement submergé par l'eau à traiter de façon à retenir les particules non floculées et non décantées de l'eau à traiter, et en ce que ledit tamis présente un pouvoir de coupure compris entre 1 et 500 µm.

Au sujet de la zone de floculation, on notera que celle-ci permettra préférentiellement de regrouper deux étapes, à savoir une première étape d'injection du réactif floculant et du matériau granulaire dans l'eau précoagulée et une seconde étape de maturation. Ces deux étapes pourront être effectuées soit dans deux parties distinctes de l'installation définissant ensemble la zone de floculation, à savoir une chambre de floculation et une chambre de maturation, soit dans une seule chambre, l'injection de réactif floculant et de matériau granulaire ayant alors lieu dans la première partie de celle-ci et la maturation ayant lieu dans la seconde partie de celle-ci (selon le sens d'écoulement de l'eau dans l'installation).

La présente invention consiste donc, par rapport à l'art antérieur connu le plus proche d'installations de floculation-décantation par flocs lestés, à supprimer les lamelles habituellement utilisées dans la chambre de décantation, pour les remplacer ou par un ou plusieurs tamis de filtration qui sont destinés à être directement submergées par l'eau à traiter de façon à filtrer celle-ci et à retenir les éventuelles particules non floculées comme les flocs formés par l'agrégation du matériau granulaire et de la pollution à éliminer qui n'auraient pas été décantés.

Les installations de traitement d'eau à flocs lestés selon l'invention peuvent être utilisées tant en traitement primaire sur des eaux très chargées qu'en traitement tertiaire sur des eaux déjà partiellement épurées mais aussi en clarification d'eaux de surface à potabiliser, avant leur filtration. En fonction de la nature des eaux à épurer et de leur charge, on pourra prévoir un tamis ou des tamis présentant un pouvoir de coupure plus ou moins élevé.

Dans ce cas, il sera généralement nécessaire de prévoir en aval de la chambre de décantation au moins un filtre à sable permettant de parfaire l'épuration de l'eau sortant de la chambre de décantation.

Selon une autre caractéristique préférentielle de l'invention, l'installation proposée présentera des moyens de nettoyage du tamis de filtration utilisée. Ces moyens de nettoyage pourront être choisis parmi toute la gamme de ceux classiquement utilisés pour nettoyer les tamis de filtration dans le cadre du traitement de l'eau.

On pourra ainsi notamment avoir recours à des moyens mettant en oeuvre une insufflation de gaz, tel que de l'air, à des techniques mettant en oeuvre une injection de liquide sous pression.

Selon une autre caractéristique préférentielle de l'invention, l'installation sera pourvue de moyens supplémentaires d'injection d'au moins un réactif chimique destiné à prévenir le colmatage du dispositif de filtration. Le réactif pourra être choisi parmi les différentes familles suivantes : réactif d'oxydation (ozone, chlore, bioxyde de chlore ou tout autre oxydant), réactif d'acidification, réactif d'alcalinisation, ou toute combinaison des ces réactifs, injectés en continu ou de façon séquencée.

Dans le but de faciliter le montage et le démontage des tamis, on pourra également prévoir des moyens de fixation amovibles de ceux-ci au sein de la chambre de décantation.

Selon encore une autre variante préférentielle de l'invention, la chambre de décantation sera pourvue de moyens d'écumage permettant de récupérer les polluants flottants ne participant pas à la formation de flocs lestés tels que par exemple les bouts de papier, les bouts de bois, boules de graisse etc.

Selon une autre variante de l'invention, l'installation inclura également des moyens de recyclage du matériau granulaire vers la zone de floculation. D'une façon classique de tels moyens incluent une canalisation de récupération des boues provenant de la zone de récupération et d'évacuation des boues de la chambre de décantation, des moyens de séparation du matériau granulaire contenu dans ces boues tels qu'un hydrocyclone et des moyens permettant de réintroduire ce matériau granulaire dans la zone de floculation.

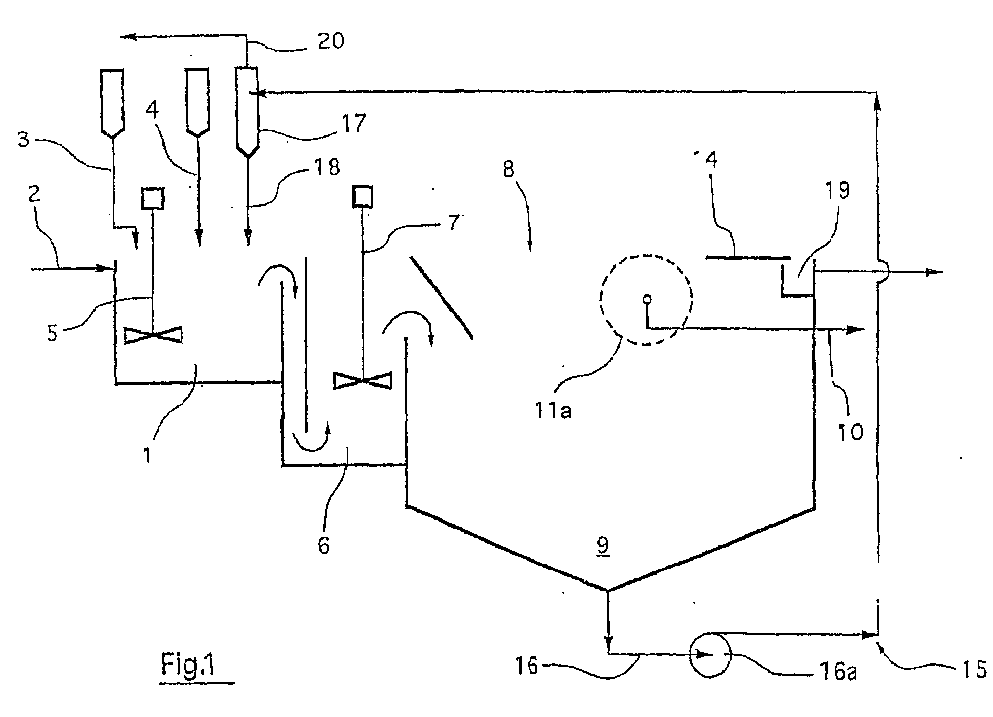

L'invention ainsi que les différents avantages qu'elle présente seront plus facilement compris grâce à la description qui va suivre d'un mode de réalisation de celle-ci donné en référence à la figure 1 qui représente de façon schématique une installation de traitement d'eau par flocs lestés conformes à la présente invention.

En référence à la figure 1, l'installation représentée comprend en série une chambre d'injection 1, une chambre de maturation 6, lesdites chambres 1 et 6 formant une zone de floculation, et une chambre de décantation 8.

La chambre d'injection est, de façon classique, pourvue de moyens d'arrivée d'eau à épurer 2 précoagulée, de moyens de distribution d'un agent floculant éventuel 3, de moyens de distribution 4 d'un matériau granulaire, en l'occurrence du sable, et de moyens d'agitation 5.

La chambre de maturation 6 est quant à elle pourvue d'un agitateur 7.

La chambre de décantation 8 est dépourvue de lamelles et présente dans sa partie inférieure une zone de récupération et d'évacuation 9 des boues et dans sa partie supérieure d'un trop-plein 19 pour l' évacuation des flottants. La chambre de décantation est également pourvue de moyens 10 d'évacuation de l'eau clarifiée, décantée et filtrée.

Egalement d'une façon classique, l'installation comprend des moyens de recyclage 15 du matériau granulaire récupéré dans la zone de récupération et d'évacuation 9 de la chambre de décautation 8. Ces moyens de recyclage incluent une canalisation 16, coopérant avec une pompe 16a qui dirige les boues récupérées en 9 vers un hydrocyclone 17 pourvu de moyens de distribution 18 du matériau granulaire séparé dans la chambre d'injection 1 et de moyens 20 d'évacuation du reste des boues.

Conformément à la présente invention, la chambre de décantation 8 est pourvue d'une ou plusieurs tamis 11a rotatif montée sur des moyens amovibles de fixation 13 à travers laquelle transite le flux d'eau à traiter provenant de la chambre de coagulation 6.

Egalement, conformément à la présente invention, l'installation comprend également des moyens 12 de nettoyage à l'air du tamis 11a ainsi que des moyens d'écumage 14.

Le fonctionnement de l'installation est le suivant.

L'eau à épurer précongulée arrive par les moyens 2 dans la chambre d'injection 1. Grâce aux moyens d'agitation 5 un mélange est formé entre cette eau, le réactif floculant et le matériau granulaire. Ce mélange transite ensuite dans la chambre de maturation 6 ou l'agitateur 7 favorise la création de flocs lestés. Le mélange eau + flocs lestés passe ensuite dans la chambre de décantation 8 où décantent en zone 9 les flocs lestés. Grâce au tamis 11a les particules résiduelles non décantées sont séparées de l'eau épurée. L'eau épurée quitte la chambre de décantation 8 par les moyens d'évacuation 10. Les polluants flottants sont éliminés grâce au moyen d'écumage 14.

Les flocs lestés retenus par le tamis 11a forment des boues qui :
- soit viennent en surface par exemple par flottation lors du nettoyage à l'air, ou entraînement hydraulique ou gravitaire fonctionnant de façon continue ou discontinue ;
- soit décantent vers le fond du décanteur et sont évacuées par les moyens 16/16a.

Une telle installation permet, par rapport à l'état de la technique, d'intégrer totalement l'étape de tamisage de finition dans l'étape de décantation.

Le mode de réalisation de l'invention ainsi décrit n'a pas pour objet de réduire la portée de celle-ci. En conséquence, il pourra y être apporté de nombreuses modifications sans sortir de son cadre.

## Revendications

1. Installation de traitement d'eau précoagulée comprenant, en série :
- au moins une zone de floculation (1,6) pourvue de moyens d'amenée d'eau coagulée (2), de moyens d'amenée d'au moins un réactif floculant (3), de moyens d'amenée d'au moins un matériau granulaire plus dense que l'eau (4) et de moyens d'agitation (5,7) ; et,
- au moins une chambre de décantation (8) pourvue d'une zone de récupération et d'évacuation de boues (9), de moyens d'évacuation (10) d'eau clarifiée et des moyens de trop-plein (19) pour évacuer les flottants ;
**caractérisée en ce que** ladite chambre de décantation (8) est dépourvue de lamelle et pourvue d'au moins un tamis (11a) destiné à être directement submergé par l'eau à traiter de façon à retenir les particules non floculées et non décantées de l'eau à traiter, et **en ce que** ledit tamis (11a) présente un pouvoir de coupure compris entre 1 et 500 µm.

2. Installation selon la revendication 1 **caractérisée en ce qu'**elle comprend de plus au moins une filtre à sable en aval de ladite chambre de décantation.

3. Installation selon l'une quelconque des revendications 1 à 2 **caractérisée en ce qu'**elle comprend des moyens de nettoyage (12) dudit tamis (11a).

4. Installation selon l'une quelconque des revendications 1 à 3 **caractérisée en ce qu'**elle comprend des moyens d'injection d'au moins un réactif chimique destiné à prévenir le colmatage dudit tamis (11a).

5. Installation selon l'une quelconque des revendications 1 à 4 **caractérisée en ce qu'**elle comprend des moyens de fixation amovible (13) dudit tamis (11a).

6. Installation selon l'une quelconque des revendications 1 à 5 **caractérisé en ce que** ladite chambre de décantation (8) est pourvue de moyens d'écumage (14).

7. Installation selon l'une quelconque des revendications 1 à 6 **caractérisée en ce qu'**elle inclut des moyens de recyclage (15) dudit matériau granulaire vers ladite zone de floculation.

8. Installation selon l'une quelconque des revendications 1 à 7 **caractérisée en ce que** ledit tamis est un tamis rotatif (11a).

## Patentansprüche

1. Anlage zur Behandlung von vorkoaguliertem Wasser, das der Reihe nach folgendes umfasst:
- mindestens einen Ausflockungsbereich (1, 6), der Mittel zum Heranleiten von koaguliertem Wasser (2), Mittel zum Heranleiten von mindestens einem Flockungsreagens (3), Mittel zum Heranleiten von mindestens einem körnigen Material (4), das dichter als Wasser ist, sowie Rührmittel (5, 7) aufweist, und
- mindestens eine Klärkammer (8) mit einem Bereich zur Rückgewinnung und Ableiten der Schlämme (9), Mittel (10) zum Ableiten des geklärten Wassers sowie Überlaufmittel (19) zum Ableiten schwimmender Anteile,
**dadurch gekennzeichnet, dass** die Klärkammer (8) frei ist von Lamellen und mindestens ein Sieb (11a) aufweist, zum direkten Untertauchen in das zu behandelnde Wasser, um die nicht ausgeflockten und nicht geklärten Teilchen des zu behandelnden Wassers zurückzuhalten und, dass das Sieb (11a) ein Trennvermögen aufweist, das zwischen 1 und 500 µm liegt.

2. Anlage nach Anspruch 1, **dadurch gekennzeichnet, dass** sie ferner mindestens einen stromabwärts der Klärkammer angebrachten Sandfilter aufweist.

3. Anlage nach einem der Ansprüche 1 bis 2, **dadurch gekennzeichnet, dass** sie Reinigungsmittel (12) für das Sieb (11a) aufweist.

4. Anlage nach einem der Ansprüche 1 bis 3, **dadurch gekennzeichnet, dass** sie Mittel zum Einspritzen eines chemischen Reagens aufweist, welches das Verstopfen des Siebs (11a) verhindern soll.

5. Anlage nach einem der Ansprüche 1 bis 4, **dadurch gekennzeichnet, dass** sie herausnehmbare Befestigungsmittel (13) des Siebes (11a) aufweist.

6. Anlage nach einem der Ansprüche 1 bis 5, **dadurch gekennzeichnet, dass** die Klärkammer (8) über Schäumungsmittel (14) verfügt.

7. Anlage nach einem der Ansprüche 1 bis 6, **dadurch gekennzeichnet, dass** sie über Mittel (15) zum Zurückleiten des körnigen Materials in Richtung des Ausflockungsbereiches verfügt.

8. Anlage nach einem der Ansprüche 1 bis 7, **dadurch gekennzeichnet, dass** das Sieb ein Drehsieb (11a) ist.

## Claims

1. Installation for treating precoagulated water comprising, in series :
- at least one flocculation zone (1,6) provided with means for feeding in coagulated water (2), means for feeding in at least one flocculating agent (3), means for feeding in at least one granular material that is more dense than water (4) and means of agitation (5, 7); and
- at least one decanting chamber (8) provided with a zone for recovering and evacuating sludge (9), means (10) for evacuating clarified water and over-flow means (19) for evacuating floating materials;
**characterized in that** the said decanting chamber (8) is non-lamellar and is provided with at least one sieve (11a) designed to be directly submerged by the water to be treated so as to retain the non-flocculating and non-decanted particles of the water to be treated, and **in that** the said sieve (11a) has a cut-off power of between 1 and 500 _m.

2. Installation according to claim 1, **characterized in that** it includes at least one sand filter downstream from the said decanting chamber.

3. Installation according to either of claims 1 or 2, **characterized in that** it includes means (12) for cleaning the said sieve (11a).

4. Installation according to any one of claims 1 to 3, **characterized in that** it includes means for injecting at least one chemical reagent designed to prevent the said sieve (11a) from clogging.

5. Installation according to any one of claims 1 to 4, **characterized in that** it includes detachable means (13) for fixing the said sieve (11a).

6. Installation according to any one of claims 1 to 5, **characterized in that** the said decanting chamber (8) is provided with skimming means (14).

7. Installation according to any one of claims 1 to 6, **characterized in that** it includes means (15) for recycling the said granular material to the said flocculating zone.

8. Installation according to any one of claims 1 to 7, **characterized in that** the said sieve is a rotating sieve (11a).
